# EUROPEAN PATENT SPECIFICATION

(11) **EP 3 187 271 B1**
(45) Date of publication and mention of the grant of the patent: **01.05.2019**
(21) Application number: 15815880.8
(22) Date of filing: 12.06.2015
(51) Int. Cl.: B05D 5/00, B05D 7/14, B32B 15/082, C09D 129/04, C09D 133/02, C09D 133/24, C09D 171/02, F28F 1/32, F28F 13/18, B05D 7/24

(54) **METHOD FOR COATING ALUMINUM FIN MATERIAL WITH HYDROPHILIC FILM, ALUMINUM FIN MATERIAL, AND ALUMINUM HEAT EXCHANGER**
VERFAHREN ZUR BESCHICHTUNG EINES ALUMINIUMRIPPENMATERIALS MIT EINEM HYDROPHILEN FILM, ALUMINIUMRIPPENMATERIAL UND ALUMINIUMWÄRMETAUSCHER
PROCÉDÉ DE REVÊTEMENT DE MATÉRIAU D'AILETTE EN ALUMINIUM AVEC FILM HYDROPHILE, MATÉRIAU D'AILETTE EN ALUMINIUM, ET ÉCHANGEUR DE CHALEUR EN ALUMINIUM

(30) Priority: 30.06.2014 JP 2014134168
(43) Date of publication of application: 05.07.2017
(73) Proprietor: UACJ Corporation, Tokyo 100-0004 (JP)
(72) Inventor: SAKATA, Yosuke, Tokyo 140-8675 (JP); TAGO, Masako, Tokyo 140-8675 (JP); SEKO, Yoshiya, Nagoya-shi Aichi 455-8670 (JP); SASAZAKI, Mikine, Nagoya-shi Aichi 455-8670 (JP); SATO, Takahiro, Nagoya-shi Aichi 455-8670 (JP); UEDA, Kaoru, Nagoya-shi Aichi 455-8670 (JP)
(74) Representative: Herzog, Fiesser & Partner Patentanwälte PartG mbB
(86) International application number: PCT/JP2015/067084
(87) International publication number: WO 2016/002484

(56) References cited:
- WO-A1-2013/191149
- WO-A1-2013/191149
- JP-A- 2011 148 889
- JP-B2- 5 180 145

## Description

### TECHNICAL FIELD

The present invention relates to a method for coating an aluminum fin material with a hydrophilic film, an aluminum fin material, and an aluminum heat exchanger.

### BACKGROUND ART

Aluminum and alloys thereof have been used for a variety of applications because they are lightweight and have excellent processability and thermal conductivity. For example, an aluminum-made heat exchanger has been known.

With regard to a fin of a heat exchanger in an air conditioner and the like, moisture in the air may adhere to a surface of the fin as condensed water during cooling operation, and the resulting water droplets may sometimes cause cloggings. These cloggings may increase the ventilation resistance and may decrease the exchange efficiency of the heat exchanger, as well as may cause problems such as noise generation, pollution due to scattering of water droplets and the like. In order to prevent the occurrence of such problems, a hydrophilization treatment on a surface of the fin has conventionally been conducted.

In addition, in recent years, as required performance for the hydrophilization treatment, also maintenance of hydrophilicity when a contaminant adheres to the surface has become increasingly important. This is because there are contaminants such as lubricants for plastics including palmitic acid, stearic acid, paraffin acid and the like, as well as diisooctyl phthalate and the like as a variety of substances suspended in a room in an environment in which an air conditioner and the like are used, and these contaminants may significantly impair hydrophilicity of a hydrophilic film by adhering to the surface of the fin.

As a hydrophilization treatment agent, a polymer composition for hydrophilization treatment which comprises a high molecular weight compound such as a polyacrylic acid polymer, and another high molecular weight compound which binds to the high molecule by hydrogen bonding such as polyethylene oxide has been proposed (for example, see Patent Document 1). This is a technique which improves the maintenance of hydrophilicity of a hydrophilic film, but it is insufficient in terms of suppression of decrease in the above-described hydrophilicity depending on types of contaminants which adhere to the film. Further, it is insufficient in terms of adhesion between a metal surface and the hydrophilic film in a state in which moisture adheres to the hydrophilic film.

Further, a hydrophilization treatment agent containing a salt of carboxymethyl cellulose, N-methylolacrylamide, polyacrylic acid and polyethylene oxide, as well as, a hydrophilization treatment agent containing an aqueous polymer compound containing a polyoxyalkylene chain, an aqueous resin and N-methylolacrylamide have been proposed (for example, see Patent Documents 2 and 3). In these techniques, N-methylolacrylamide is contained as a monomer, and therefore, they were insufficient in terms of the above-described maintenance in case that a contaminant adheres to the surface.

Furthermore, crosslinking microparticles obtainable from a monoethylenic monomer having a polyoxyalkylene chain, a (meth)acrylamide-based monoethylenic monomer, a crosslinking unsaturated monomer having an N-methylol group and a polymerizable double bond such as N-methylolacrylamide and another monomer have been proposed (for example, see Patent Documents 4 to 6). In particular, by admixing specific crosslinking microparticles to a hydrophilization treatment agent, the maintenance of hydrophilicity can be increased after a contaminant adheres and also adhesion between a hydrophilic film and a metal surface in a state in which water adheres to the hydrophilic film can be sufficiently improved (see Patent Document 7 and 8).
Patent Document 1: Japanese Unexamined Patent Application, Publication No. H06-322292
Patent Document 2: Japanese Unexamined Patent Application, Publication No. H06-322552
Patent Document 3: Japanese Unexamined Patent Application, Publication No. H07-102189
Patent Document 4: Japanese Unexamined Patent Application, Publication No. H08-120003
Patent Document 5: Japanese Unexamined Patent Application, Publication No. 2000-248225
Patent Document 6: Japanese Unexamined Patent Application, Publication No. 2002-302644
Patent Document 7: Japanese Unexamined Patent Application, Publication No. 2005-2151
Patent Document 8: Japanese Unexamined Patent Application, Publication No. 2014-000534

EP 2 862 634 A1, a regional phase of WO 2013/91149 A1 describes a method for surface treatment of a heat exchanger capable of forming a hydrophilic film and an aluminium fin material obtained by this method. The composition there exhibits a hydrophilisation treatment agents characterized by another ratio of its constituents, and moreover does not define the polyoxyalkyene ether chain segment in terms of molecular weight of the polyoxyalkyene ether chain segment.

JP 5 180145 B2 and JP 2011-148889 A describe both method for surface treatment and of coating a hydrophilic film from crosslinkable fine particles. The compositions in both documents differ also at least in the ratio of its constituents.

### DISCLOSURE OF THE INVENTION

### Problems to be Solved by the Invention

As described above, by using the hydrophilization treatment agent described in Patent Documents 7 and 8, the hydrophilic film formed on the metal surface exhibits excellent adhesion of the hydrophilic film and the metal surface in a state in which moisture adheres to the hydrophilic film and exhibits also excellent maintenance of hydrophilicity in a state in which a contaminant adheres to the hydrophilic film.

A demand for a smaller aluminum heat exchanger becomes stronger. As the heat exchanger becomes smaller, a distance between the aluminum fins becomes narrower. When a distance between the fins of the heat exchanger becomes narrower, the cloggings due to water droplet tend to occur. Therefore, a surface of the heat exchanger may be demanded to form a hydrophilic film having hydrophilicity extremely higher than the hydrophilicity that has been demanded (hereinafter, it may be called as "super-hydrophilicity").

However, it was difficult to form a hydrophilic film having the super-hydrophilicity on an aluminum heat exchanger having a small separation between the fins.

The present invention was accomplished in view of the above-described problems, and an object of the present invention is to provide a method for surface treatment of a heat exchanger, which is possible to form hydrophilic film exhibiting extremely high hydrophilicity (super-hydrophilicity), and therefore also having excellent maintenance of hydrophilicity as well as excellent adhesion of a hydrophilic film and a metal surface in a state in which moisture adheres to the hydrophilic film; an aluminum fin material in which a hydrophilic film is formed on the surface of a fin by the aforementioned method; and an aluminum heat exchanger which uses the aluminum fin material.

### Means for Solving the Problems

The present inventors found that when a metal surface is coated with a hydrophilic film formed with a hydrophilization treatment agent that contains a hydrophilic resin and crosslinking microparticles, the hydrophilic resin containing a specific (meth)acrylic resin, polyvinyl alcohol, and a polyalkylene ether resin having a specific molecular weight, and has blending ratios of the respective components adjusted in a specific range, the above problem can be solved, and completed the invention. More specifically, the present invention provides the followings.

In order to achieve the above-described object, the present invention provides:
A method for coating a surface of aluminum fin material with a hydrophilic film, that is a method for treating a surface of an aluminum heat exchanger comprising:
bringing a chemical conversion treatment agent into contact with a surface of an aluminum fin material used for the aluminum heat exchanger to form a chemical conversion film; and
bringing a hydrophilization treatment agent into contact with the chemical conversion film obtained in the above-described step to form a hydrophilic film,
wherein,
the hydrophilization treatment agent comprises:
   a (meth)acrylic resin (A) comprising a repeating unit derived from an acrylic acid monomer and/or a repeating unit derived from a methacrylic acid monomer;
   polyvinyl alcohol (B);
   a polyalkylene ether resin (C); and
   crosslinking microparticles (D), wherein,
   the (meth)acrylic resin (A):
      (1) does not comprise a repeating unit derived from a monomer having a sulfo group and a repeating unit derived from a monomer having an amide group;
      (2) has a weight average molecular weight of from 20,000 to 2,000,000; and
      (3) has an acid value of a solid component of the resin of from 100 to 800 mgKOH/g,
wherein,
the polyalkylene ether resin (C) has a weight average molecular weight of from 5,000 to 500,000,
the crosslinking microparticles (D) are obtained by copolymerizing from 30 to 95 mass% of a monomer (a) represented by the following formula (I), from 5 to 60 mass% of a monomer (b) having a polyoxyalkylene chain and a polymerizable double bond, and from 0 to 50 mass% of another polymerizable monomer (c), 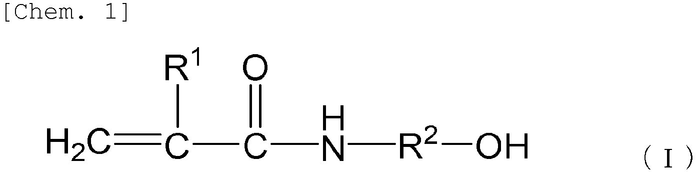
(wherein, R¹ represents a hydrogen atom or a methyl group, and R² represents CH₂ or C₂H₄), wherein,
a content rate of a solid component of the (meth)acrylic resin (A) is from 10 to 30 mass%, a content rate of a solid component of the polyvinyl alcohol (B) is from 5 to 40 mass%, a content rate of a solid component of the polyalkylene ether resin (C) is from 40 to 50 mass%, and a content rate of a solid component of the crosslinking microparticles (D) is from 10 to 20 mass%, in the solid component of the hydrophilization treatment agent,
and wherein,
a rate of a content of the polyvinyl alcohol (B) to a content of the polyalkylene ether resin (C) (content of the polyvinyl alcohol (B)/content of the polyalkylene ether resin (C)) is from 1/9 to 1/1, in the total solid component of the hydrophilization treatment agent.

The present invention provides an aluminum fin material having a hydrophilic film formed on its surface according to the method for coating the hydrophilic film of the present invention.

The present invention further provides an aluminum heat exchanger comprising the aluminum fin material according to the present invention.

### Effects of the Invention

The hydrophilic film formed on the metal surface by using the hydrophilization treatment agent according to the present invention exhibits extremely high hydrophilicity (super-hydrophilicity), is excellent also having excellent maintenance of hydrophilicity as well as excellent adhesion of the hydrophilic film and a metal surface in a state in which moisture adheres to the hydrophilic film.

### PREFERRED MODE FOR CARRYING OUT THE INVENTION

Hereinafter, embodiments of the present invention will be described. The present invention is not limited to the following embodiments.

### Aluminum Fin Material

An aluminum coil on which the hydrophilization treatment agent used for the present invention is applied is subjected to predetermined processings to construct a fin.

A method for forming a hydrophilic film by using the hydrophilization treatment agent is not particularly limited, and for example, a method which comprises degreasing the aluminum coil, and then conducting chemical conversion treatment by phosphoric chromate, and then applying the above-described hydrophilization treatment agent on the aluminum coil according to a roll coater method, and heat drying the coil to form the hydrophilic film may be employed.

Generally, hydrophilicity and corrosion resistance are required for the surface of the aluminum fin material, however the more excellent in the hydrophilicity of a film is, the less excellent in corrosion resistance of the film is, in general. Therefore, there is no problem for the aluminum fin material according to the present invention at all, if surface treatment imparting corrosion resistance is conducted by primer treatment with an organic resin before forming the hydrophilic film and after the chemical conversion treatment in order to form a corrosion resistant film as an undercoat.

"Aluminum" is a general term for metals and alloys comprising mostly of aluminum and has a concept where pure aluminum and aluminum alloys are included.

In the heat exchanger, a plurality of fins are disposed at a narrow interval and tubes for supplying a refrigerant are disposed at these fins in a complicated manner in order to maximize a surface area from the viewpoint of improvement in heat exchange efficiency.

### Aluminum Heat Exchanger

The heat exchanger according to the present invention is configured with a cross fin tube formed by integrally assembling refrigerant tubes and fin materials by inserting the above-described refrigerant tubes made of a copper alloy into cylindrical collar portions provided in the above-described aluminum fin material.

The above-described fin material is created by press working of a fin material for a heat exchanger formed of an aluminum plate to make openings for assembly which have fin collar portions with a height of about 1 to 4 mm for the insertion and fixation of the above-described tubes. Next, thus obtained fin materials are stacked and then, the tubes separately created are inserted within the above-described openings for assembly. As the tubes, generally, copper tubes or copper alloy tubes are employed and they are subjected to processing for providing grooves on their interior sides and the like by component rolling and the like, and then are subjected to standard size cutting · hairpin bending processing. Next, the tubes are fixed to the aluminum plate fin materials by expanding the tubes outward to bring the tubes into a forced fit contact with the fins, and then brazing the end parts of the tubes which are opposite to the sides subjected to the hairpin bending processing with U-bend tubes to yield a heat exchanger. It is noted that the above-described "copper alloy" is a general term for metals and alloys comprising mostly of copper and has a concept where pure copper and copper alloys are included.

### Method for Surface Treatment of Heat Exchanger

In the method for surface treatment according to the present invention, a specific hydrophilization treatment agent is used. The specific hydrophilization treatment agent contains specific hydrophilic resins and specific crosslinking microparticles at a specific ratio. By containing these components in the hydrophilization treatment agent, a hydrophilic film formed on a metal surface exhibits extremely high hydrophilicity (super-hydrophilicity) and therefore has excellent maintenance of hydrophilicity as well as excellent adhesion of the hydrophilic film and the metal surface in a state in which moisture adheres to the hydrophilic film.

### [Hydrophilic Resins]

The hydrophilic resins according to the present invention essentially contain, a (meth)acrylic resin (A) containing a repeating unit derived from an acrylic acid monomer and/or a repeating unit derived from a methacrylic acid monomer; polyvinyl alcohol (B); and, a polyalkylene ether resin (C).

The (meth)acrylic resin (A) contains a repeating unit derived from at least one monomer selected from an acrylic acid monomer and a methacrylic acid monomer. A total content of the repeating unit derived from an acrylic acid monomer and the repeating unit derived from a methacrylic acid monomer is not particularly limited, but it is preferable that the total content is from 50 to 100 mass%.

The (meth)acrylic resin (A) may contain a repeating unit other than the repeating unit derived from an acrylic acid monomer and the repeating unit derived from a methacrylic acid monomer. For example, the (meth)acrylic resin (A) may contain a derivative and the like of an acrylic acid monomer or a methacrylic acid monomer.

Specifically, examples of a monomer which has one polymerizable unsaturated bond in a molecule include: an alkyl methacrylate such as methyl methacrylate, n-butyl methacrylate, i-butyl methacrylate, 2-ethylhexyl methacrylate, isononyl methacrylate, n-octyl methacrylate, lauryl methacrylate, stearyl methacrylate or the like; an alkyl acrylate such as methyl acrylate, n-butyl acrylate, i-butyl acrylate, 2-ethylhexyl acrylate, isononyl acrylate, n-octyl acrylate or the like; an aralkyl methacrylate such as benzyl methacrylate or the like; an aralkyl acrylate such as benzyl acrylate or the like; an alkoxyalkyl methacrylate such as butoxyethyl methacrylate or the like; an alkoxyalkyl acrylate such as butoxyethyl acrylate and the like. They may be used alone, or in a combination of two or more.

In addition, the (meth)acrylic resin (A) may contain components other than the above-described monomers, however, preferably, it does not contain the repeating unit derived from a monomer having a sulfo group or the repeating unit derived from a monomer having an amide group. When the (meth)acrylic resin (A) contains these, there is a tendency that the problem of odors is difficult to suppress.

A content rate of the solid component of the (meth)acrylic resin (A) in the total solid component of the hydrophilization treatment agent is from 10 to 30 mass%. When the content rate of the solid component of the (meth)acrylic resin (A) is less than 10 mass%, adhesion of the hydrophilic film and the metal surface tends to be decreased. When the content rate of the solid component of the (meth)acrylic resin (A) exceeds 30 mass%, the maintenance of hydrophilicity tends to be decreased. When the content rate of the solid component of the (meth)acrylic resin (A) is in the above-described range, it is possible to make almost all the (meth)acrylic resin (A) exist in a boundary to the metal surface and to make the (meth)acrylic resin (A) not exist in the surface side of the hydrophilic film.

An acid value of the (meth)acrylic resin (A) is from 100 to 800 mgKOH/g. When the acid value of the (meth)acrylic resin (A) is less than 100 mgKOH/g, the adhesion of the hydrophilic film and the metal surface tends to be decreased. When the acid value of the (meth)acrylic resin (A) exceeds 800 mgKOH/g, the hydrophilic film tends to adhere to acid components in the air, and as a result, odor resistance tends to be decreased.

A weight average molecular weight of the (meth)acrylic resin (A) is from 20,000 to 2,000,000. When the weight average molecular weight of the (meth)acrylic resin (A) is less than 20,000, the maintenance of hydrophilicity tends to be decreased. When the weight average molecular weight of the (meth)acrylic resin (A) exceeds 2,000,000, the viscosity of the hydrophilization treatment agent tends to be increased, and as a result, a working property tends to be impaired. When the weight average molecular weight of the (meth)acrylic resin (A) is small, the (meth)acrylic resin (A) existing near the boundary to the metal surface tends to be transferred to the surface side of the hydrophilic film, when moisture contacts with the hydrophilic film. When the (meth)acrylic resin (A) is transferred to the surface side of the hydrophilic film, the adhesion of the hydrophilic film and the metal surface tends to be decreased. Further, when the weight average molecular weight is exceedingly low, it is thought that the adhesion of the hydrophilic film and the metal surface tends to be decreased due to elution of the resin (A) into water. When the weight average molecular weight of the (meth)acrylic resin (A) is in the above-described range, even when a state such that water adheres to the surface of the hydrophilic film continues, the problem of decreased adhesion between the hydrophilic film and the metal surface does not occur. A more preferable range of the weight average molecular weight of the (meth)acrylic resin (A) is from 20,000 to 100,000. Meanwhile, as a value of the weight average molecular weight, a value measured by a gel permeation chromatography (GPC) method is employed. Specifically, the weight-average molecular weight is measured with GPC of Model LC-08 (A-5432) manufactured by Japan Analytical Industry Co., Ltd. using a solution prepared by dissolving 0.4 part by weight of a resin sample based on 100 parts by mass of tetrahydrofuran as a sample solution, and calculated in terms of polystyrene.

Polyvinyl alcohol (B) contained in the hydrophilization treatment agent can be obtained by saponificating a polymer produced by polymerizing polyvinyl acetate. In the present invention, a degree of polymerization of polyvinyl alcohol (B) is not particularly limited, but it is preferable that the degree of polymerization is from 300 to 2,000. In addition, it is preferable that a degree of saponification of polyvinyl alcohol (B) is 95% or more.

A content rate of the solid component of polyvinyl alcohol (B) in the total solid component of the hydrophilization treatment agent is from 5 to 40 mass%. When the above-described content rate is less than 5 mass%, the adhesion of the metal surface and the hydrophilic film in a state in which moisture adheres to the hydrophilic film tends to be insufficient and the maintenance of hydrophilicity tends to be decreased. When the above-described content rate exceeds 40 mass%, the super-hydrophilicity of the hydrophilic film tends to be difficult to exhibit. It is preferable that the above-described content rate is from 15 to 25 mass%.

The polyalkylene ether resin (C) contained in the hydrophilization treatment agent is a component which imparts hydrophilicity and lubricity to the hydrophilic film. By imparting the lubricity to the hydrophilic film, processability is improved when the surface of the aluminum fin material is subjected to press working and the like.

The polyalkylene ether resin (C) is not particularly limited as long as it has the weight average molecular weight in the above-described range. Examples of the polyalkylene ether resin (C) include polyoxyethylene (polyethylene oxide, polyethylene glycol), polyoxypropylene and condensates thereof. Further, these polyalkylene ether resins may be mixed and used. As the polyalkylene ether resin (C), from the viewpoint of increasing the hydrophilicity of the formed hydrophilic film, polyoxyethylene is preferably used.

The polyalkylene ether resin (C) has the weight average molecular weight of from 5,000 to 500,000. When the weight average molecular weight of the polyalkylene ether resin (C) is less than 5,000, the solubility into water of the polyalkylene ether resin (C) becomes excessively high, thus the maintenance of hydrophilicity of the formed hydrophilic film tends to be decreased. On the other hand, when the weight average molecular weight of the polyalkylene ether resin (C) exceeds 500,000, the viscosity of the polyalkylene ether resin (C) becomes higher, thus a coating property tends to be degraded. The polyalkylene ether resin (C) has preferably the weight average molecular weight of from 5,000 to 30,000. When the weight average molecular weight of the polyalkylene ether resin (C) is small like this, the hydrophilicity of the polyalkylene ether resin (C) becomes higher. Therefore, the hydrophilic film can exhibit higher super-hydrophilicity.

A content rate of the solid component of the polyalkylene ether resin (C) in the total solid component of the hydrophilization treatment agent is from 40 to 50 mass%. When the above-described content rate is less than 40 mass%, the hydrophilic film does not exhibit the super-hydrophilicity. When the above-described content rate exceeds 50 mass%, a film component tends to be eluted into water.

Further, a rate of the content of the polyvinyl alcohol (B) to the content of the polyalkylene ether resin (C) (the content of the polyvinyl alcohol (B)/the content of the polyalkylene ether resin (C)) in the solid component of the hydrophilization treatment agent is from 1/9 to 1/1. When the rate (the content of the polyvinyl alcohol (B)/the content of the polyalkylene ether resin (C)) is less than 1/9, also the adhesion of the metal surface and the hydrophilic film in a state in which moisture adheres to the hydrophilic film becomes insufficient, thus the film component tends to be eluted into water. On the other hand, when the rate (the content of the polyvinyl alcohol (B)/the content of the polyalkylene ether resin (C)) exceeds 1/1, the super-hydrophilicity of the hydrophilic film becomes difficult to exhibit. The rate (the content of the polyvinyl alcohol (B)/the content of the polyalkylene ether resin (C)) is preferable to be in the range of from 1/9 to 1/2.

In the invention, mainly as shown above, in the solid component of the hydrophilization treatment agent, the content rate of the solid component of the polyalkylene ether resin (C) is set high. From this, it is considered that because the polyvinyl alcohol (B) that becomes a base of a formed hydrophilic film and improves the adhesion with the aluminum surface and the polyalkylene ether resin (C) present on a surface of the hydrophilic film are intimately phase-isolated, and many irregularities are formed on the surface of the hydrophilic film, thereby the super-hydrophilicity is exhibited.

When the content rate of the solid component of the polyalkylene ether resin (C) is increased, the adhesion of the hydrophilic film and the metal surface tends to be decreased. In the invention, the adhesion of the hydrophilic film and the metal surface is improved by setting the content rate of the solid component of the (meth)acrylic resin (A) present in the vicinity of a boundary to the metal surface higher to be in the above range.

### [Crosslinking Microparticles]

The crosslinkable fine particles (D) according to the present invention are resin particles composed of a copolymer obtained by copolymerizing monomer components comprising a monomer (a) represented by the following formula (I), a monomer (b) having a polyoxyalkylene chain and a polymerizable double bond, and another polymerizable monomer (c). In the above-described crosslinking microparticles (D), a methylol group and an ethylol group on the above-described (a) and a functional group such as a carboxyl group, a hydroxy group or the like on the above-described (b) may react, the methylol group and the ethylol group may undergo a condensation reaction with each other, or the methylol group and the ethylol group on the above-described (a) and the carboxyl group and the hydroxy group on the above-described (c) may react. Accordingly, when the above-described crosslinking microparticles (D) are used as components of the hydrophilization treatment agent, a water-insoluble robust hydrophilic film can be formed on a metal surface. In addition, the above-described crosslinking microparticles (D) are highly hydrophilic, and have relatively many unreacted functional groups, and therefore, when the crosslinking microparticles (D) are used as components of the hydrophilization treatment agent, the crosslinking microparticles (D) react with other hydrophilic resins without impairing the hydrophilicity, and the maintenance of hydrophilicity may be markedly increased after a contaminant adheres to the film. Further, the above-described crosslinking microparticles (D) have a relatively small swelling ratio against water, and therefore, dissolution of the formed hydrophilic film into water is also suppressed.

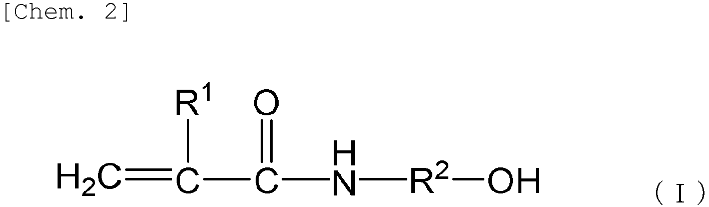

The monomer (a) represented by the above-described formula (I) is N-methylolacrylamide, N-methylol methacrylamide, N-hydroxyethyl acrylamide or N-hydroxyethyl methacrylamide. By using the hydrophilization treatment agent which contains the crosslinking microparticles (D) obtained by using the monomer (a) represented by the above-described formula (I), a hydrophilic film which is excellent in the above-described maintenance of hydrophilicity and in the above-described adhesion can be formed. They may be used alone, or in a combination of two or more.

The above-described crosslinking microparticles (D) can be obtained by copolymerizing monomer components which contain from 30 to 95 mass% of the monomer (a) represented by the above-described formula (I). When the content of the monomer (a) is less than 30 mass%, the maintenance of hydrophilicity of the hydrophilic film after a contaminant adheres to the hydrophilic film tends to be decreased. When the content of the monomer (a) exceeds 95 mass%, the manufacturing tends to be difficult. Since the monomer (a) represented by the above-described formula (I) is admixed in the above-described range, the monomer (a) acts both as a crosslinking component and as a major component in the components constituting the hydrophilic film. Namely, when the monomer (a) is admixed for expressing only a function as a crosslinking component, generally, the amount of the monomer (a) is smaller than the above-described range. However, in the crosslinking microparticles (D) according to the present invention, by admixing the monomer (a) represented by the above-described formula (I) within the above-described range, methylol groups and ethylol groups remain in the crosslinking microparticles even after copolymerization. Accordingly, when a hydrophilic film is formed by using the hydrophilization treatment agent which contains the above-described crosslinking microparticles (D), the film can react with other hydrophilic resins and then robust adhesion and maintenance of hydrophilicity can be achieved. As a result, even after lubricants for plastics such as palmitic acid, stearic acid, paraffin acid and the like, and contaminants such as diisooctyl phthalate and the like adhere to thus formed hydrophilic film, the hydrophilicity of the hydrophilic film can be sufficiently sustained.

Further, a degree of crosslinking of the crosslinking microparticles obtained by admixing the monomer (a) represented by the above-described formula (I) is increased when the admixed amount of the monomer (a) increases. Accordingly, dissolution of thus formed hydrophilic film due to moisture is suppressed, and therefore, the film exhibiting excellent adhesion (adhesion in the case when the film is exposed to moisture) can be formed.

An admixed amount of the monomer (a) represented by the above-described formula (I) is preferably from 30 to 95 mass% based on 100 mass% of the monomer components. The above-described lower limit is more preferably 40 mass%, and the above-described upper limit is more preferably 80 mass%.

The above-described monomer (b) is not particularly limited, as long as it is a monomer having a polyoxyalkylene chain and a polymerizable double bond, however it is preferably a compound represented by the following formula (II) and/or the following formula (III). By using such a monomer, crosslinking microparticles which have dispersion stability in water and excellent hydrophilicity can be obtained.

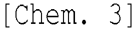

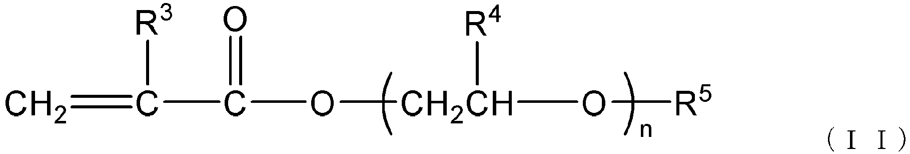

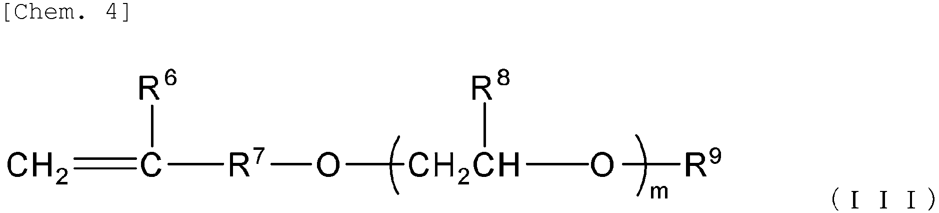

In the above-described formula (II), the above-described R³ and the above-described R⁴ may be the same or different, and represent a hydrogen atom or a methyl group. The above-described R⁵ represents a hydrogen atom, a methyl group, SO₃H, SO₃Na or SO₃NH₄.

In the above-described formula (II), n represents an integer of from 6 to 300. When the n is less than 6, dispersion stability and hydrophilicity tend to be insufficient, and when n exceeds 300, the manufacturing tends to be difficult. It is preferable that the above-described lower limit is 30 and that the above-described upper limit is 200.

In the above-described formula (III), the above-described R⁶ and the above-described R⁸ may be the same or different, and represent a hydrogen atom or a methyl group. The above-described R⁹ represents a hydrogen atom, a methyl group, SO₃H, SO₃Na or SO₃NH₄. The above-described R⁷ represents CH₂ or a benzene ring (the following chemical formula (IV)).

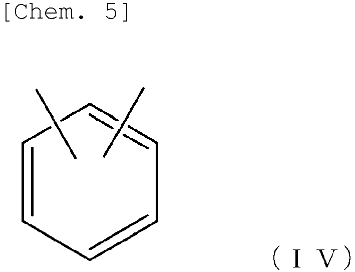

In the above-described formula (III), m represents an integer of from 6 to 300. When m is less than 6, dispersion stability and hydrophilicity tend to be insufficient, and when m exceeds 300, the manufacturing tends to be difficult. It is preferable that the above-described lower limit is 30 and that the above-described upper limit is 200.

The above-described monomer (b) is not particularly limited, and examples of the above-described monomer (b) include, for example, methoxy polyethylene glycol monomethacrylate, methoxy polyethylene glycol monoacrylate, octoxy polyethylene glycol-polypropylene glycol monoacrylate and the like, in addition to compounds represented by the above-described formula (II) and the above-described formula (III). They may be used alone, or in a combination of two or more.

It is preferable that the above-described monomer (b) is a compound containing a polyoxyalkylene chain in an amount of 50 mass% or more. In this regard, 50 mass% or more means that the mass of the total solid components of a portion of a polyoxyalkylene chain is in an amount of 50 mass% or more in 100 mass% of the mass of the solid components of the monomer (b) used. When the monomer (b) is a compound containing a polyoxyalkylene chain in an amount less than 50 mass%, hydrophilicity of a hydrophilic film tends to be decreased. It is more preferable that the above-described monomer (b) contains a polyoxyalkylene chain in an amount of from 80 to 99 mass%.

An amount of the above-described monomer (b) admixed is from 5 to 60 mass% based on 100 mass% of the monomer components. When then amount of the above-described monomer (b) admixed is less than 5 mass%, dispersibility of crosslinking microparticles in a hydrophilization treatment agent tends to be decreased, and hydrophilicity of a hydrophilic film tends to be decreased. When the amount of the above-described monomer (b) admixed exceeds 60 mass%, adhesion of the hydrophilic film tends to be insufficient and maintenance of hydrophilicity after a contaminant adheres to the film tends to be decreased. It is preferable that the above-described lower limit is 10 mass% and that the above-described upper limit is 40 mass%.

The above-described another polymerizable monomer (c) is not particularly limited, as long as it is a compound which contains a polymerizable unsaturated bond in a molecule and which can be copolymerized with the monomer (a) represented by the above-described formula (I) and the above-described monomer (b). Examples of the another polymerizable monomer (c) include, for example, acrylic acid, methacrylic acid, itaconic acid, maleic acid, a vinyl monomer such as a vinyl acetate group, acrylic acid 2-hydroxyethyl ester, acrylic acid hydroxypropyl ester, N-vinylacetamide, N-vinylformamide, N-vinylpyrrolidone, N-vinylimidazole, acrylonitrile, methyl acrylate, methyl methacrylate, styrene, an unsaturated double bond-containing surfactant, acrylamide, methacrylamide, N-methylacrylamide, N-vinylsulfonic acid, N-allyl sulfonic acid, sodium styrene sulfonate, 2-acrylamide-2-methylpropanesulfonic acid and the like. In addition, an unsaturated monomer used for general radical polymerization can also be used, such as acrylic acid ester, methacrylic acid ester other than methyl acrylate and methyl methacrylate. Among them, acrylic acid and methacrylic acid are preferable because they can improve the hydrophilicity of the resulting crosslinking microparticles. They may be used alone, or in a combination of two or more.

An amount of the above-described another polymerizable monomer (c) admixed is from 0 to 50 mass% based on 100 mass% of monomer components. When the amount of the above-described another polymerizable monomer (c) admixed exceeds 50 mass%, hydrophilicity and crosslinkability of the resulting crosslinking microparticles (D) tend to be decreased, and maintenance of hydrophilicity of a hydrophilic film after a contaminant adheres to the film tends to be decreased. It is preferable that the above-described upper limit is 30 mass%.

It is preferable that a water swelling ratio of crosslinking microparticles (D) according to the present invention is from 1.0 to 1.5. With this configuration, when a hydrophilic film is formed, the decrease in adhesion between the hydrophilic film and a metal surface is suppressed even after the hydrophilic film is exposed to moisture. A water swelling ratio of 1.5 or less can be achieved by appropriately setting a reaction condition in the above-described compounding ratios of the monomer (a) represented by the above-described formula (I), the above-described monomer (b) and the above-described another polymerizable monomer (c). It is more preferable that the above-described water swelling ratio is from 1.0 to 1.3. In the present specification, the water swelling ratio is a value calculated by the following equation: a water swelling ratio = a particle diameter in an aqueous solution/a particle diameter in a solvent. In addition, a particle diameter (D₅₀) is a value measured by using an electrophoretic light scattering photometer, Photal ELS-800 (manufactured by OTSUKA ELECTRONICS CO. LTD.).

The crosslinking microparticles (D) according to the present invention can be manufactured by polymerizing, for example, from 30 to 95 mass% of the above-described N-methylol (meth)acrylamide (a), from 5 to 60 mass% of the above-described monomer (b) having the above-described polyoxyalkylene chain and a polymerizable double bond, and from 0 to 50 mass% of the above-described another polymerizable monomer (c) in the absence of a dispersion stabilizer and in a water miscible organic solvent or in a mixed solvent of water miscible organic solvent/water, which dissolves monomers used but does not substantially dissolve the resulting copolymer.

In polymerization in preparing the above-described crosslinking microparticles (D), a dispersing agent may be used together. Examples of the above-described dispersing agent include, for example, a dispersion resin such as polyvinylpyrrolidone, polyvinyl alcohol, polycarboxylic acid or the like and a various surfactant such as an anionic surfactant, a cationic surfactant, a nonionic surfactant and the like.

In preparing the crosslinking microparticles (D) according to the present invention, copolymerization of monomer components composed of the above-described (a), the above-described (b) and the above-described (c) may be conducted in a solvent including an ether type solvent such as an alkylene glycol monoalkyl ether (for example, ethylene glycol monobutyl ether and the like), methoxypropanol, a mixed solvent of the above solvent and water and the like.

The copolymerization of monomer components composed of the above-described (a), the above-described (b) and the above-described (c) is generally conducted in the presence of a radical polymerization initiator. The above-described radical polymerization initiator is not particularly limited, however all of the commonly used radical polymerization initiators can be used. Examples of the radical polymerization initiator include, for example, a peroxide such as benzoyl peroxide, lauroyl peroxide, di-t-butyl peroxide, cumene hydroperoxide, t-butyl peroctoate, or t-butylperoxy-2-ethylhexanoate; an azo compound such as 2,2'-azobisisobutyronitrile, 2,2'-azobis(2,4-dimethylvaleronitrile), 2,2'-azobis(4-methoxy-2,4-dimethylvaleronitrile), dimethyl-2,2'-azo-bis-isobutyrate or 4,4'-azobis(4-cyanopentanoic acid); an amidine compound such as 2,2'-azobis(2-amidinopropane)dihydrochloride, 2,2'-azobis-(N-N'-dimethylene isobutyl amidine) or 2,2'-azobis-(N-N'-dimethylene isobutyl amidine) dihydrochloride; a persulfate type initiator such as potassium persulfate, ammonium persulfate, or a system in which a persulfate type initiator and sodium thiosulfate, an amine or the like are used together and the like. They may be used alone, or in a combination of two or more. Generally, the amount of the radical polymerization initiator used can be in a range of from 0.2 to 5 mass% based on the total amount of monomers.

A polymerization temperature in the above-described copolymerization may be varied depending on the type of a polymerization initiator used and the like, and generally, it is appropriate that the polymerization temperature is a temperature in a range of from 70 to 140°C. When the polymerization temperature is lower than 70°C, crosslinkability tends to be insufficient, and when the polymerization temperature exceeds 140°C, the control of reaction tends to be difficult. It is more preferable that the above-described lower limit is 90°C and that of the above-described upper limit is 120°C. A reaction time is generally from 0.2 to 5 hours. When the reaction time is shorter than 0.2 hour, the crosslinkability tends to be insufficient and even when the reaction time exceeds 5 hours, reactivity remains unchanged and tends to be disadvantageous in terms of cost. When the polymerization temperature is set to 90°C or higher, a crosslinking reaction within particles can be made to proceed. When the polymerization temperature is lower than 70°C, generally, the crosslinking reaction within particles in polymerization tends to hardly proceed, and therefore, generally, after the polymerization reaction, a procedure, which comprises heating the prepared polymer at a temperature of 90°C or higher for from 0.2 to 5 hours, is conducted such that the crosslinking reaction within particles proceeds.

In addition, as required, a catalyst for a crosslinking reaction may be added to a polymerization reaction system in order to make the crosslinking reaction within particles of polymer particles proceed more rapidly during the polymerization reaction or after the polymerization reaction. Examples of the above-described catalyst for the crosslinking reaction include, for example, a strong acid catalyst such as dodecylbenzenesulfonic acid, paratoluensulfonic acid; a strong acid catalyst containing a polymerizable double bond such as sulfoethyl methacrylate and the like.

A volume average particle diameter of the crosslinking microparticles obtained as described above is not particularly limited, and the volume average particle diameter is generally in a range of from 0.03 to 1 µm, and preferably in a range of from 0.05 to 0.6 µm in terms of stability of the crosslinking microparticles.

A hydrophilization treatment agent containing the above-described crosslinking microparticles and hydrophilic resins is able to form a hydrophilic film which exhibits excellent maintenance of hydrophilicity and which exhibits excellent adhesion. When the above-described hydrophilization treatment agent is used on a surface of a metal, in particular, of aluminum or an alloy thereof, the hydrophilization treatment agent is able to form a hydrophilic film excellent in the maintenance of hydrophilicity and in the adhesion.

A content of the crosslinkable fine particles (D) in the total solid component of the hydrophilization treatment agent is from 10 to 20 mass%. When the content is less than 10 mass%, hydrophilicity tends to be decreased and adhesion tends to be decreased. On the other hand, when the content exceeds 20 mass%, it is disadvantageous in terms of cost.

### [Other Components]

A pigment may be added to the above-described hydrophilization treatment agent in order to form a colored hydrophilic film. The pigment to be added is not particularly limited, and a commonly used color pigment such as an inorganic pigment, an organic pigment and the like may be used.

To the above-described hydrophilization treatment agent, a required amount of the following other components may be added, depending on the additionally desired function. Examples of other components include, for example, a hydrophilic additive such as a surfactant, colloidal silica, titanium oxide, or saccharides; a rust preventive additive such as tannic acid, imidazoles, triazines, triazoles, guanines, hydrazines, a phenol resin, a zirconium compound or a silane coupling agent; a crosslinking agent such as a melamine resin, an epoxy resin, blocked isocyanate, amine, a phenol resin, silica, aluminum or zirconium; an antimicrobial agent, a dispersing agent, a lubricant, a deodorant, or a solvent and the like.

### [Method for Surface Treatment of Heat Exchanger]

By using the method for surface treatment according to the invention, a hydrophilic film, which is extremely high in hydrophilicity (super-hydrophilicity), is excellent also in maintenance of hydrophilicity, and is excellent also in adhesion of a hydrophilic film and the metal surface in a state in which moisture adheres to the hydrophilic film can be formed. In particular, the method for surface treatment according to the present invention is a method which may be suitably applied to aluminum or its alloys. Meanwhile, since the above-described effects can be exhibited by using the above-described specific hydrophilization treatment agent, as a method for forming a hydrophilic film, a conventional method may be employed.

In a conventional method for surface treatment of a heat exchanger, generally, first of all, a metal plate made of aluminum or an aluminum alloy and the like is subjected to degreasing treatment. Next, a chemical conversion treatment agent is brought into contact with the plate to form a chemical conversion film, and further a hydrophilization treatment agent is brought into contact with the chemical conversion film obtained by the above-described step to form a hydrophilic film. As required, a corrosion resistant resin primer may be applied to the chemical conversion film, and the chemical conversion film to which the primer is applied may be brought into contact with the hydrophilization treatment agent to form a hydrophilic film.

The above-described degreasing treatment may be any alkaline degreasing treatment using an alkaline solution of such as sodium hydroxide, sodium carbonate, sodium silicate, sodium phosphate and the like. In addition, examples of the above-described chemical conversion treatment include, phosphoric chromate treatment, coating type chromate treatment, non-chromate treatment and the like. The above-described phosphoric chromate treatment can be conducted by using a treatment liquid containing chromic anhydride and phosphoric acid added with an additive. The above-described phosphoric chromate treatment can be conducted by soaking in a treatment liquid, spraying a treatment liquid and the like. Examples of the above-described corrosion resistant resin primer include an acrylic, an epoxy-based, a polyester-based, a phenol-based resin primer or urethane-based resin primer.

It is preferable that a chromium (Cr) content in a chemical conversion film obtained by the above-described phosphoric chromate treatment is from 3 to 50 mg/m² in terms of Cr. When the chromium content is less than 3 mg/m², rust resistance tends to be insufficient, and when the chromium content exceeds 50 mg/m², a reaction with the hydrophilic film tends to occur, which may lead to decreased hydrophilicity. A metal such as aluminum or an aluminum alloy on which the chemical conversion film is formed is generally washed with water. It is preferable that this water washing is conducted for about from 10 to 30 seconds.

A treatment agent used for the above-described coating type chromate treatment is a chromate treatment agent used for coating treatment conducted by using a roll coater or the like. In this case, it is preferable that a chromium content in the film is preferably from 5 to 30 mg/m² in terms of Cr.

A treatment agent used for the above-described non-chromate treatment is a treatment agent which does not contain chromium, and examples of the treatment agent include, for example, a zirconium-based treatment agent. Examples of the above-described zirconium-based treatment agent include a mixture of polyacrylic acid and zircon fluoride and the like.

It is preferable that a zirconium content in the film obtained by using the above-described zirconium-based treatment agent is from 0.1 to 40 mg/m² in terms of Zr. When the zirconium content is less than 0.1 mg/m², corrosion resistance tends to be insufficient and even when the zirconium content exceeds 40 mg/m², it tends to be uneconomical. When the zirconium-based treatment is conducted after the chromate treatment, greater effects can be exhibited.

As pretreatments in the method for surface treatment according to the present invention, generally, the above-described degreasing treatment and the above-described chemical conversion treatment are conducted, and as required, primer treatment is conducted after the chemical conversion treatment.

The method for surface treatment according to the present invention includes an application step of the above-described hydrophilization treatment agent on a metal surface of aluminum or an aluminum alloy and the like on which the above-described chemical conversion treatment has been conducted. Examples of the application method include, a roll coat method, a bar-coating method, a soaking method, a spray coat method, a brush coating method and the like. It is preferable that drying and baking are conducted, after the application, at a temperature of from 120 to 300°C for from 3 seconds to 60 minutes to obtain a hydrophilic film. When a baking temperature is lower than 120°C, film formation tends to be insufficient, and there is a possibility of dissolution of the film after being soaked in water. When the baking temperature exceeds 300°C, a resin tends to be decomposed, and there is a possibility of impairing the hydrophilicity of the hydrophilic film.

A hydrophilic film formed by the above-described method for surface treatment is a film which is formed on a surface of a metal, in particular, on aluminum or its alloy, and which exhibits excellent hydrophilicity, in particular, excellent maintenance of the hydrophilicity after a contaminant adheres to the film, as well as excellent adhesion.

A film thickness of the above-described hydrophilic film is, preferably 0.05 g/m² or more, and more preferably from 0.1 to 2 g/m². When the film thickness of the film is less than 0.05 g/m², maintenance of hydrophilicity and processability of the film tend to be insufficient.

### EXAMPLES

Hereinafter, the present invention will be described in more details by referring to Examples, but the present invention is not limited only to these Examples.

### Materials

PAA-1: polyacrylic acid (weight average molecular weight: 20,000, acid value: 780 mgKOH/g)
PAA-2: polyacrylic acid (weight average molecular weight: 6,000, acid value: 780 mgKOH/g)
PAA-AAM: a copolymer of polyacrylic acid and acrylamide (weight average molecular weight: 20,000, acid value: 40 mgKOH/g)
PVA: polyvinyl alcohol (weight average molecular weight: 20,000, degree of saponification : 98.5)
PEO: polyethylene oxide (weight average molecular weight: 500, 000)
PEG-1: polyethylene glycol (weight average molecular weight: 20, 000)
PEG-2: polyethylene glycol (weight average molecular weight: 1,000)
PEO-PPO: polyoxyethylene-polyoxypropylene condensate (weight average molecular weight: 15,500)
Resin particles: crosslinking microparticles (a manufacturing method will be described below.)

### [Method for Manufacturing Crosslinking Microparticles]

A monomer solution in which 60 parts by mass of N-methylolacrylamide, 20 parts by mass of methoxy polyethylene glycol monomethacrylate (a polyethylene chain of which the number of a repeating unit is 100), 10 parts by mass of acrylic acid and 10 parts by mass of acrylamide were dissolved in 200 parts by mass of methoxypropanol, and a solution in which 1 part by mass of "ACVA"(an azoic polymerization initiator manufactured by Otsuka Chemical Co., Ltd.) was dissolved in 50 parts by mass of methoxypropanol, were added dropwise to 150 parts by mass of methoxypropanol over 3 hours under a nitrogen atmosphere at 105°C, from separate inlets respectively, and a mixture was subjected to polymerization by heating for further 1 hour under stirring. In the resulting dispersion liquid, crosslinking microparticles had a mean particle diameter of 350 nm, a water swelling ratio of 1.15, a viscosity measured by Ford Cup No.4 of 18 seconds, and a concentration of solid components of 20 mass%.

### Preparation of Hydrophilization Treatment Agent

Components shown in Table 1 and Table 2 were mixed at ratios shown in Table 1 and Table 2 (contents (unit: mass%) in solid components of the hydrophilization treatment agent), and hydrophilization treatment agents used in Examples and hydrophylization treatment agents used in Comparative Examples were prepared.

**[Table 1]**

| | | Example 1 | Example 2 | Example 3 | Example 4 | Example 5 | Example 6 | Example 7 | Example 8 | Example 9 |
|---|---|---|---|---|---|---|---|---|---|---|
| PAA-1 | | 30 | 30 | 10 | 10 | 20 | 20 | 10 | 10 | 30 |
| PAA-2 | | | | | | | | | | |
| MAA-AAm | | | | | | | | | | |
| PVA | | 20 | 10 | 35 | 20 | 30 | 30 | 30 | 30 | 5 |
| Polyoxyalkylene ether (PAE) | PEO | | | | | 40 | | 20 | | |
| | PEG-1 | 40 | 50 | 40 | 50 | | | 30 | 30 | 45 |
| | PEG-2 | | | | | | | | | |
| | PEO-PPO | | | | | | 40 | | 20 | |
| Resin particles | | 10 | 10 | 15 | 20 | 10 | 10 | 10 | 10 | 20 |
| Content of polyvinyl alcohol/content of polyalkylene ether | | 0.50 | 0.20 | 0.88 | 0.40 | 0.75 | 0.75 | 0.60 | 0.60 | 0.11 |
| Results of evaluation | Initial hydrophilicity | A | A | B | A | B | B | B | B | A |
| | Maintenance of hydrophilicity | A | A | B | A | B | B | B | B | A |
| | Wet adhesion | B | B | B | B | B | B | B | B | B |
| | Processability | A | A | A | A | A | A | A | A | A |
| | Super-hydrophilicity | A | A | B | A | B | B | B | B | A |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| PAA-1 | | 5 | 35 | | | 30 | 20 | 10 | 30 | 30 |
| PAA-2 | | | | 30 | | | | | | |
| MAA-AAm | | | | | 30 | | | | | |
| PVA | | 35 | 15 | 20 | 20 | 5 | 30 | 20 | 20 | 25 |
| Polyoxyalkylene ether (PAE) | PEO | | | | | | | | | 40 |
| | PEG-1 | 50 | 40 | 40 | 40 | 50 | 35 | 55 | | |
| | PEG-2 | | | | | | | | 40 | |
| | PEO-PPO | | | | | | | | | |
| Resin particles | | 10 | 10 | 10 | 10 | 15 | 15 | 15 | 10 | 5 |
| Content of polyvinyl alcohol/content of polyalkylene ether | | 0.70 | 0.38 | 0.50 | 0.50 | 0.10 | 0.86 | 0.36 | 0.50 | 0.63 |
| Results of evaluation | Initial hydrophilicity | A | A | B | A | D | C | B | B | C |
| | Maintenance of hydrophilicity | E | D | D | E | E | C | C | D | C |
| | Wet adhesion | D | B | B | D | D | B | D | D | D |
| | Processability | D | A | A | D | A | A | A | D | D |
| | Super-hydrophilicity | - | D | D | - | D | C | C | - | - |

### Production of Test Plate

An aluminum material made of "1000-Series Aluminum" with a size of 150 × 200 × 0.13 mm was degresead at 70°C for 5 seconds by using 1% solution of SURFCLEANER EC370 manufactured by NIPPON PAINT Co., Ltd., and then the aluminum material was subjected to phosphoric chromate treatment at 40°C for 5 seconds by using 10% solution of ALSURF 407/47 manufactured by NIPPON PAINT Co., Ltd. Then, a solid component of each of the hydrophilization treatment agents obtained as described above was adjusted to 5%, and it was applied on the above-described aluminum material by using a bar coater #4, and then it was heated at 220°C for 20 seconds to dry to produce a test plate. The test plate was used for the following evaluations.

### Evaluation of Initial Hydrophilicity

A contact angle of a test plate with a water droplet was evaluated. The measurement of the contact angle was conducted by using a FACE automatic contact angle meter "CA-Z" (manufactured by Kyowa Interface Science Co., LTD.). At 30 seconds after dropping under room temperature, the contact angle with a water droplet was evaluated. Based on the contact angle measured, the hydrophilicity was evaluated according to the following criteria. Evaluation results are shown in Table 1 and Table 2. When the evaluation is equal to or more than B, the hydrophilicity is determined to be good.

### (Evaluation Criteria)

A: A contact angle with water was 5° or less.
B: The contact angle exceeded 5° and was equal to or less than 10°.
C: The contact angle exceeded 10° and was equal to or less than 20°.
D: The contact angle exceeded 20° and was equal to or less than 30°.
E: The contact angle exceeded 30°.

### Evaluation of Maintenance of Hydrophilicity

After the test plate was soaked in pure water for 240 hours, the contact angle with a water droplet was evaluated. The measurement of the contact angle was conducted by using a FACE automatic contact angle meter "CA-Z" (manufactured by Kyowa Interface Science Co., LTD.). At 30 seconds after dropping under room temperature, the contact angle with a water droplet was evaluated. Based on the contact angle measured, the hydrophilicity was determined according to the following criteria. The results of evaluation are shown in Table 1 and Table 2. When the evaluation is equal to or more than B, the hydrophilicity is determined to be excellent.

### (Evaluation Criteria)

A: A contact angle with water was 5° or less.
B: The contact angle exceeded 5° and was equal to or less than 10°.
C: The contact angle exceeded 10° and was equal to or less than 20°.
D: The contact angle exceeded 20° and was equal to or less than 30°.
E: The contact angle exceeded 30°.

### Evaluation of Wet Adhesion

After mounting 16-ply Kimwipe obtained by folding 4 sheets of Kimwipe into 16-ply Kimwipe to an apex of a hammer of the load of 2 pounds, the folded Kimwipe was soaked with water and set on a surface of the test plate. Subsequently, the number of times of sliding at which peeling of the hydrophilic film was observed was confirmed by sliding the hammer such that the load is vertically applied on the test plate. The wet adhesion was evaluated according to the following criteria. Results of evaluation are shown in Table 1 and Table 2. When the evaluation is equal to or more than C, the adhesion is determined to be excellent.

### (Evaluation Criteria)

A: The hydrophilic film was peeled at the number of times of sliding of 10 times or more.
B: The hydrophilic film was peeled at the number of times of sliding of 7 times or more and less than 10 times.
C: The hydrophilic film was peeled at the number of times of sliding of 4 times or more and less than 7 times.
D: The hydrophilic film was peeled at the number of times of sliding of 1 time or more and less than 4 times.

### Evaluation of Processability

After a machining oil was applied on a surface of the test plate, a single-shot press was performed such that the drawing rate is 48%. The processability was evaluated according to the following criteria based on a degree of the peeling of a coated film of a color part after press. Results of evaluation are shown in Table 1 and Table 2. The processability was determined to be excellent when the evaluation is equal to or more than B.

### (Evaluation Criteria)

A: There was found no change.
B: There was found a slight peeling.
C: The peeling was observed as a vertical streak.
D: Entire surface peeling was observed.

### Evaluation of Super-hydrophilicity

The test plate was molded with a fin pitch of 1.2 mm to obtain a plate fin. Three-hundred sheets of the plate fins were stacked and expanded with an inner grooved tube having an outer diameter φ of 7 mm, and a fin and tube-type heat exchanger was formed. Ventilation resistance Pa and ventilation resistance Pb were measured with the obtained heat exchanger. The ventilation resistance Pa shows a ventilation resistance value measured under a wind velocity condition of 1.5 m/s of a plate-fin heat exchanger in a state in which the fin is dry. Further, the ventilation resistance Pb shows a ventilation resistance value measured under a wind velocity condition of 1.5 m/s of a plate-fin heat exchanger in a state in which the plate-fin heat exchanger is placed under an environment of a dry bulb temperature of 27°C and a wet bulb temperature of 20°C and operated for 5 hours with a refrigerant of 3°C, and condensed water is generated on a fin surface. A value of the ventilation resistance B (Pb)/the ventilation resistance (Pa) was obtained, and the ventilation resistance was evaluated according to the following criteria. Results of evaluation are shown in Table 1 and Table 2.
A: 1.0≤(Pb/Pa)<1.2
B: 1.2≤(Pb/Pa)<1.5
C: 1.5≤(Pb/Pa)<2.0
D: 2.0≤(Pb/Pa)
- : The ventilation resistance could not be measured.

From comparison between Examples 1, 3, 5 and 6 and Comparative Example 8, it was found that the hydrophilic films of Examples 1, 3, 5 and 6 are more excellent in maintenance of hydrophilicity than that of Comparative Example 8. From this result, it was confirmed that when the hydrophilization treatment agent contains a polyalkylene ether resin having a specific molecular weight, the hydrophilicity and the maintenance of hydrophilicity of the formed hydrophilic film can be improved.

From comparison between Example 3 and Comparative Example 6, it was found that the hydrophilic film of Example 3 is more excellent in the super-hydrophilicity than that of Comparative Example 6. Further, from comparison between Example 4 and Comparative Example 7, it was found that the hydrophilic film of Example 4 is more excellent in the super-hydrophilicity than that of Comparative Example 7. From these results, it was confirmed that when the content of the polyalkylene ether resin that the hydrophilic treatment agent contains is from 40 to 50 mass%, the hydrophilicity of the formed hydrophilic film can be improved.

From comparison of Example 9 and Comparative Example 5, it was found that the hydrophilic film of Example 9 has the super-hydrophilicity, maintenance of hydrophilicity and the wet adhesion more excellent than those of Comparative Example 5. From this result, it was confirmed that when the ratio of the content of polyvinyl alcohol to the content of polyalkylene ether contained in the hydrophilization treatment agent is equal to or more than 1/9, the formed hydrophilic film is excellent in the adhesion with a metal surface and the maintenance of hydrophilicity in a state in which water adheres to the hydrophilic film.

From comparison of Example 3 and Comparative Example 1, it was found that the hydrophilic film of Example 3 has more excellent maintenance of hydrophilicity than that of Comparative Example 1. Further, from comparison of Example 2 and Comparative Example 2, it was found that the hydrophilic film of Example 2 has the super-hydrophilicity and the maintenance of hydrophilicity more excellent than those of Comparative Example 2. From these results, it was confirmed that when the content rate of the solid component of (meth)acrylic resin (A) contained in the hydrophilization treatment agent is from 10 to 30 mass%, the formed hydrophilic film is excellent in the super-hydrophilicity and the maintenance of hydrophilicity.

From comparison of Example 5 and Comparative Example 9, it was found that the hydrophilic film of Example 5 has the hydrophilicity, maintenance of hydrophilicity, the adhesion and the processability more excellent than those of Comparative Example 9. From this result, it was confirmed that when the content rate of the solid component of the resin particles (D) contained in the hydrophilization treatment agent is equal to or more than 10 mass%, the formed hydrophilic film is excellent in the hydrophilicity and its maintenance, the adhesion and the processability.

From comparison of Example 1 and Comparative Example 3, it was found that the hydrophilic film of Example 1 has the super-hydrophilicity and maintenance of hydrophilicity more excellent than those of Comparative Example 3. From this result, it was confirmed that when the weight average molecular weight of the acrylic resin contained in the hydrophilization treatment agent is adjusted in a specific range (from 20,000 to 2,000,000), the formed hydrophilic film has excellent super-hydrophilicity and maintenance of hydrophilicity.

From comparison of Example 1 and Comparative Example 4, it was found that the hydrophilic film of Example 1 has the WET adhesion more excellent than that of Comparative Example 4. From this result, it was confirmed that when the acid value of the acrylic resin contained in the hydrophilization treatment agent is adjusted in a specific range (from 100 to 800 mgKOH/g), the formed hydrophilic film is excellent in the WET adhesion.

### INDUSTRIAL APPLICABILITY

According to the method for surface treatment of the present invention, a hydrophilic film, which exhibits extremely high hydrophilicity (super-hydrophilicity) and therefore also having excellent maintenance of hydrophilicity as well as excellent adhesion of the hydrophilic film and a metal surface in a state in which moisture adheres to the film can be formed on the metal surface. Accordingly, the method for surface treatment according to the present invention can be preferably used as a method for forming a hydrophilic film on a surface of a fin in a heat exchanger such as an air conditioner and the like.

## Claims

1. A method of coating a surface of an aluminum fin material with a hydrophilic film, that is a method of treating a surface of an aluminum heat exchanger, wherein,
bringing a chemical conversion treatment agent into contact with a surface of an aluminum fin material used for the aluminum heat exchanger to form a chemical conversion film; and
bringing a hydrophilization treatment agent into contact with thus obtained chemical conversion film to form a hydrophilic film, wherein,
the hydrophilization treatment agent comprises:
a (meth)acrylic resin (A) including a repeating unit derived from an acrylic acid monomer and/or a repeating unit derived from a methacrylic acid monomer;
polyvinyl alcohol (B);
a polyalkylene ether resin (C); and crosslinking microparticles (D),wherein,
the (meth)acrylic resin (A):
(1) does not comprise a repeating unit derived from a monomer having a sulfo group and a repeating unit derived from a monomer having an amide group;
(2) has a weight average molecular weight of from 20,000 to 2,000,000; and
(3) has an acid value of the solid component of the resin of from 100 to 800 mgKOH/g, wherein,
the polyalkylene ether resin (C) has a weight average molecular weight of from 5,000 to 500,000,
the crosslinking microparticles (D) are obtained by copolymerizing from 30 to 95 mass% of a monomer (a) represented by the following formula (I), from 5 to 60 mass% of a monomer (b) having a polyoxyalkylene chain and a polymerizable double bond, and from 0 to 50 mass% of another polymerizable monomer (c), 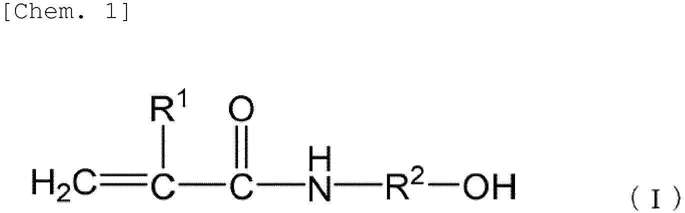
wherein, R¹ represents a hydrogen atom or a methyl group, and
R² represents CH₂ or C₂H₄ **characterised in that**
a content rate of a solid component of the (meth)acrylic resin (A) is from 10 to 30 mass%, a content rate of a solid component of the polyvinyl alcohol (B) is from 5 to 40 mass%, a content rate of a solid component of the polyalkylene ether resin (C) is from 40 to 50 mass%, and a content rate of a solid component of the crosslinking microparticles (D) is from 10 to 20 mass%, in the total solid component of the hydrophylization treatment agent,
a ratio of the content of the polyvinyl alcohol (B) to the content of the polyalkylene ether resin (C), wherein the content of the polyvinyl alcohol (B)/content of the polyalkylene ether resin (C)) is from 1/9 to 1/1.

2. An aluminum fin material obtainable by forming a hydrophilic film on its surface according to the method for coating with the hydrophilic film of claim 1.

3. An aluminum heat exchanger comprising the aluminum fin material according to claim 2.

## Patentansprüche

1. Verfahren zum Beschichten einer Oberfläche aus einem Aluminium-Lamellenmaterial mit einem hydrophilen Film, das ist ein Verfahren zum Behandeln einer Oberfläche eines Aluminium-Wärmetauschers, wobei,
Inkontaktbringen eines chemischen Umwandlungsbehandlungsmittels mit einer Oberfläche aus einem Aluminiumlamellenmaterial, das für den Aluminiumwärmetauscher verwendet wird, um einen chemischen Umwandlungsfilm zu bilden; und
Inkontaktbringen eines Hydrophilierungsbehandlungsmittels mit dem so erhaltenen chemischen Umwandlungsfilm zur Bildung eines hydrophilen Films, wobei,
das Hydrophilisierungsbehandlungsmittel umfasst:
ein (Meth)acrylharz (A) mit einer sich wiederholenden Einheit, die von einem Acrylsäuremonomer abgeleitet ist, und/oder einer sich wiederholenden Einheit, die von einem Methacrylsäuremonomer abgeleitet ist;
Polyvinylalkohol (B);
ein Polyalkylenetherharz (C); und vernetzende Mikropartikel (D),wobei,
das (Meth)acrylharz (A):
(1) nicht eine sich wiederholende Einheit umfasst, die von einem Monomer mit einer Sulfogruppe abgeleitet ist, und eine sich wiederholende Einheit, die von einem Monomer mit einer Amidgruppe abgeleitet ist;
(2) ein gewichtsmittleres Molekulargewicht von 20.000 bis 2.000.000 aufweist; und
(3) einen Säurewert der festen Komponente des Harzes von 100 bis 800 mgKOH/g aufweist, worin,
das Polyalkylenetherharz (C) ein gewichtsmittleres Molekulargewicht von 5.000 bis 500.000 aufweist,
die vernetzenden Mikropartikel (D) erhalten werden, indem 30 bis 95 Massen-% eines Monomers (a) der folgenden Formel (I), 5 bis 60 Massen-% eines Monomers (b) mit einer Polyoxyalkylenkette und einer polymerisierbaren Doppelbindung und 0 bis 50 Massen-% eines anderen polymerisierbaren Monomers (c) copolymerisiert werden, 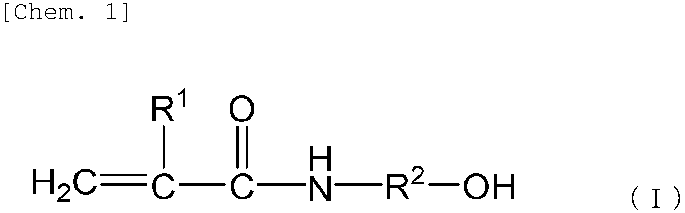
wobei ^{R1} ein Wasserstoffatom oder eine Methylgruppe darstellt, und
R² stellt CH₂ oder C₂H₄ dar, **dadurch gekennzeichnet, dass**
eine Gehaltsrate einer festen Komponente des (Meth)acrylharzes (A) von 10 bis 30 Masse-%, eine Gehaltsrate einer festen Komponente des Polyvinylalkohols (B) von 5 bis 40 Masse-%, eine Gehaltsrate einer festen Komponente des Polyalkylenetherharzes (C) von 40 bis 50 Masse-% und eine Gehaltsrate einer festen Komponente der vernetzenden Mikropartikel (D) von 10 bis 20 Masse-% in der gesamten festen Komponente des Hydrophylisierungsbehandlungsmittels beträgt,
ein Verhältnis des Gehalts des Polyvinylalkohols (B) zum Gehalt des Polyalkylenetherharzes (C), worin der Gehalt des Polyvinylalkohols (B)/Gehalt des Polyalkylenetherharzes (C) von 1/9 bis 1/1 beträgt.

2. Aluminium-Lamellenmaterial, erhältlich durch Bilden eines hydrophilen Films auf seiner Oberfläche nach dem Verfahren zum Beschichten mit dem hydrophilen Film nach Anspruch 1.

3. Aluminiumwärmetauscher, umfassend das Aluminium-Lamellenmaterial nach Anspruch 2.

## Revendications

1. Procédé de revêtement d'une surface d'un matériau à ailettes en aluminium avec un film hydrophile, qui est un procédé de traitement d'une surface d'un échangeur de chaleur en aluminium, dans lequel,
la mise en contact d'un agent de traitement de conversion chimique avec une surface d'un matériau à ailettes en aluminium utilisé dans l'échangeur de chaleur en aluminium pour former un film de conversion chimique ; et
la mise en contact d'un agent de traitement d'hydrophilisation avec un film de conversion chimique ainsi obtenu pour former un film hydrophile, dans lequel,
l'agent de traitement d'hydrophilisation comprend :
une résine (méth)acrylique (A) comprenant un motif répétitif dérivé d'un monomère d'acide acrylique et/ou un motif répétitif dérivé d'un monomère d'acide méthacrylique ;
alcool polyvinylique (B) ;
une résine de polyalkylène éther (C) ; et des microparticules de réticulation (D),dans laquelle,
la résine (méth)acrylique (A) :
(1) ne comprend pas un motif répétitif dérivé d'un monomère ayant un groupe sulfo et un motif répétitif dérivé d'un monomère ayant un groupe amide ;
(2) a un poids moléculaire moyen en poids de 20 000 à 2 000 000 ; et
(3) a un indice d'acide du composant solide de la résine de 100 à 800 mgKOH/g, où,
la résine de polyalkylène éther (C) a un poids moléculaire moyen en poids de 5 000 à 500 000,
les microparticules de réticulation (D) sont obtenues par copolymérisation de 30 à 95 % en masse d'un monomère (a) représenté par la formule (I) suivante, de 5 à 60 % en masse d'un monomère (b) ayant une chaîne polyoxyalkylène et une double liaison polymérisable, et de 0 à 50 % en masse d'un autre monomère polymérisable (c), 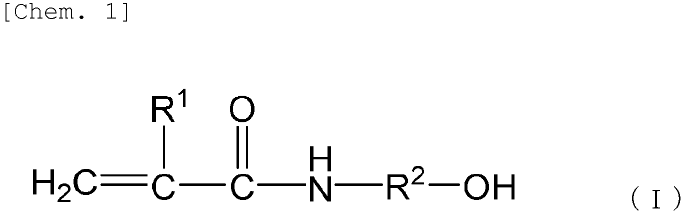
dans laquelle R¹ représente un atome d'hydrogène ou un groupe méthyle, et
R² représente CH₂ ou C₂H₄, **caractérisé en ce que**
un taux de teneur d'un composant solide de la résine (méth)acrylique (A) est de 10 à 30 % en masse, un taux de teneur d'un composant solide de l'alcool polyvinylique (B) est de 5 à 40 % en masse, un taux de teneur d'un composant solide de la résine polyalkylène éther (C) est de 40 à 50 % en masse et un taux de teneur d'un composant solide des microparticules réticulantes (D) est de 10 à 20 % en masse, dans le composant solide total du traitement hydrophylifiant,
un rapport de la teneur en alcool polyvinylique (B) à la teneur en résine polyalkylène éther (C), dans lequel la teneur en alcool polyvinylique (B)/ teneur en résine polyalkylène éther (C) est de 1/9 à 1/1.

2. Matériau à ailettes en aluminium pouvant être obtenu en formant un film hydrophile sur sa surface selon le procédé de revêtement avec le film hydrophile selon la revendication 1.

3. Echangeur de chaleur en aluminium comprenant le matériau à ailettes en aluminium selon la revendication 2.
